Europäisches Patentamt

European Patent Office

Office européen des brevets

(19)

(11) Veröffentlichungsnummer : **0 370 208 B1**

# EUROPÄISCHE PATENTSCHRIFT

(12)

(45) Veröffentlichungstag der Patentschrift :
**16.12.92 Patentblatt 92/51**

(51) Int. Cl.$^5$ : **B60B 33/02**

(21) Anmeldenummer : **89118305.5**

(22) Anmeldetag : **03.10.89**

(54) **Feststellvorrichtung für Lenkrollen von verfahrbaren Geräten, insbesondere Krankenbetten.**

(30) Priorität : **03.11.88 DE 3837307**

(43) Veröffentlichungstag der Anmeldung :
**30.05.90 Patentblatt 90/22**

(45) Bekanntmachung des Hinweises auf die
Patenterteilung :
**16.12.92 Patentblatt 92/51**

(84) Benannte Vertragsstaaten :
**BE CH FR GB IT LI NL SE**

(56) Entgegenhaltungen :
**CH-A- 173 017**
**DE-A- 1 919 576**
**DE-A- 3 502 824**
**GB-A- 1 213 671**
**US-A- 3 945 209**

(73) Patentinhaber : **Albert Schulte Söhne GmbH. &**
**Co.**
**Remscheider Strasse 25**
**W-5632 Wermelskirchen (DE)**

(72) Erfinder : **Lange, Hans-Willi, Dipl.-Ing.**
**Erlenweg 5**
**W-5632 Wermelskirchen 1 (DE)**

(74) Vertreter : **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2 (DE)**

EP 0 370 208 B1

## Beschreibung

Die Erfindung betrifft eine Feststellvorrichtung für Lenkrollen von verfahrbaren Geräten, insbesondere Krankenbetten, wobei die Rollengabel einer Lenkrolle an einem am Gerätefuß angeordneten, einen Druckmittelzylinder umfassenden Lagerkörper schwenkbar gelagert ist und in der Rollengabel ein am Lenkrollenrad sowie an einer mit dem Lagerkörper in drehfester Verbindung stehenden Sperrscheibe zur Feststellung der Schwenkbewegung angreifbares Bremsorgan mittels eines im Druckmittelzylinder geführten in zwei Endstellungen durch eine Rückstellfeder einerseits und ein Druckmittel anderseits überführbaren Kolbens betätigbar angeordnet ist, wobei der Druckmittelzylinder einer jeden Lenkrolle mittels einer Druckmittelleitung mit einer zentralen, Druck erzeugenden, kolbenbetätigten Schalteinheit verbunden ist.

Aus der DE-B 1 505 786 ist eine Feststellvorrichtung für Lenkrollen bekannt, die in einem Druckmittelzylinder der Lenkrolle einen Kolben aufweist, der über eine Kolbenstange mit einem zum Bremsorgan gehörenden Feststellhebel verbunden ist. Dieser die Schwenkbewegung der Lenkrollengabel unterbrechende Feststellhebel ist andererseits mit einem in der Höhlung der Rollengabel schwenkbeweglich angeordneten Bremshebel drehgelenkig verbunden. Der Kolben ist von einer Bremsfeder im Sperrsinne beaufschlagt, so daß bei drucklosem Druckraum Bremshebel und Feststellhebel sich in ihrer Sperrlage befinden. Zur Lösung dieser Sperrlage wird in den Druckraum des Druckmittelzylinders der Lenkrolle ein Druckmittel eingebracht, durch welches gegen die Kraft der Bremsfeder der Kolben in eine Lösestellung überführt wird, so daß das aus Bremshebel und Feststellhebel bestehende Bremsorgan solange in seiner Lösestellung verbleibt, wie das Druckmittel über den Kolben die Bremsfeder wirkungslos hält. Normalerweise befinden sich an jedem Gerät, wie beispielsweise Krankenbetten, vier Lenkrollen. Mit dem Druckraum eines jeder Lenkrolle zugehörigen Druckmittelzylinders ist eine zentrale Schalteinheit über Druckmittelleitungen verbunden, die bei der vorbekannten Ausführungsform aus einer Luftpumpe besteht. Bei dieser vorbekannten Lösung gibt es jedoch nur zwei Schaltstellungen, nämlich entweder die Lösestellung des Kolbens oder dessen Bremsstellung, da eine dosierte Druckmittelzuführung zu jeder einzelnen Lenkrolle wegen der Kompressibilität des in Form von Luft verwendeten Druckmittels nicht möglich ist. So befindet sich demgemäß die Lenkrolle entweder bei gegen die Bremsfeder niedergedrücktem Kolben in einer die Drehbewegung der Laufrolle und die Schwenkbewegung der Rollengabel ermöglichenden Lösestellung, oder aber, durch Drucklosstellung werden die Kolben der einzelnen Lenkrollen in eine Bremslage überführt, so daß sowohl die Drehbewegung der Laufrolle als auch die Schwenkbewegung der Rollengabel blockiert ist. Eine Richtungsfeststellung der Rollengabel bei freigegebener Laufrolle ist bei der vorbekannten Lösung nicht möglich.

Die Aufgabe der vorliegenden Erfindung besteht darin, für mehrere Lenkrollen eine druckmittelbetätigte Feststellvorrichtung mit zentraler Schalteinheit zu schaffen, mit der zwischen zwei Endstellungen des Bremsorgans wenigstens eine dazwischenliegende positionierte Schaltsstellung erzielbar ist. Diese Aufgabe ist erfindungsgemäß dadurch gelöst, daß die Schalteinheit jeweils eine jeder Lenkrolle zugehörige, von einem Stellpunkte aufweisenden Zentralschaltnocken betätigbare Kolben-Zylindereinheit umfaßt, mit der jedem Druckmittelzylinder einer jeden Lenkrolle eine positionierte Druckmittelmenge zur Überführung der Sperrscheibe aus ihrer federbelasteten einen Endstellung für die Richtungsfeststellung in ihre Freistellung einerseits und darüber hinaus in ihre andere Endstellung für die totale Stoppstellung andererseits zuführbar ist. Die Zuordnung einer Kolben-Zylindereinheit zu jedem Druckmittelzylinder erlaubt bei Verwendung eines inkompressiblen Druckmediums, wie Hydraulikflüssigkeit, die genaue Portionierung bestimmter Druckmittel-Teilmengen aus einer zu einer Schalteinheit gehörenden Kolben-Zylindereinheit in den jeweils damit verbundenen Druckmittelzylinder einer Lenkrolle, so daß neben den durch den oberen und unteren Totpunkt des Kolbenhubes gebildeten Endstellungen wenigstens eine Zwischenstellung für eine weitere Stellung des Bremsorgans möglich ist. Auf diese Weise läßt sich neben einer sowohl die Drehbewegung des Rollenrades als auch die Schwenkbewegung der Rollengabel freigebenden Stell-Lage und einer sowohl die Drehbewegung des Rollenrades als auch die Schwenkbewegung der Rollengabel sperrenden Stell-Lage eine weitere, nur die Richtungsfeststellung der Lenkrollengabel erzielende Stell-Lage ermöglichen. Diese unterschiedlichen Stell-Lagen lassen sich durch einen die Kolben der Kolben-Zylindereinheiten beaufschlagenden Zentralschaltnocken mit zu seinem Drehpunkt in unterschiedlichen, radialen Abständen angeordneten Stellflächen erzielen.

Zur Bildung einer kompakten Schalteinheit sind nach einem Ausgestaltungsmerkmal der Erfindung je zwei Kolben-Zylindereinheiten in einem Gehäuse einander gegenüberliegend angeordnet und durch eine den Zentralschaltnocken aufnehmende Lagerbohrung voneinander getrennt, wobei in die Lagerbohrung das Stellende eines jeden in jeder Zylinderbohrung des Gehäuses in Richtung auf den Zentralschaltnocken federbelasteten Kolben einragt. Dabei ragen aus dem Gehäuse unterseitig Zapfen mit diese durchdringender, abgestufter Befestigungsbohrung vor, wobei diese Zapfen der Zentrierung und Verbindung von übereinander angeordneten, gleichgestalteten Gehäusen zu einem Gehäuseblock dienen.

Zur zentrischen Lagerung des Zentralschaltnockens in der aus Einzelgehäusen zusammengesetzten Schalteinheit weist der Zentralschaltnocken einen in der Lagerbohrung des Gehäuses anliegenden Zylinderkragen auf, an den sich ein an eine Gehäuseaußenseite anlegender Kragenring anschließt, während im Zentrum des Zentralschaltnockens zu dessen Betätigung eine unrunde Ausnehmung zur Aufnahme des Mitnehmerzapfens einesin die Lagerbohrung eingreifenden und die dem Kragenring gegenüberliegende Gehäuseaußenseite übergreifenden Schalthebels aufweist.

Bei symmetrischer Gestaltung der halben Umfangsseiten des Zentralschaltnockens können bei der Verwendung von jeweils zwei auf einer Seite angeordneten und sich einander gegenüberliegenden Kolben-Zylindereinheiten vier Lenkrollen gleichmäßig und mit gleicher Schaltfolge, beispielsweise zur Richtungsfeststellung der Lenkrollen, zur Freigabe der Dreh- und Schwenkbewegung sowie zur Feststellung von Dreh- und Schwenkbewegung geschaltet werden. In vielen Fällen genügt es jedoch, wenn bei den auf der schmalseite des Gerätes, wie beispielsweise eines Krankenbettes angeordneten Rollen, die drei vorgenannten Schaltlagen eingestellt werden können, während bei den auf der anderen Schmalseite des Gerätes angeordneten beiden Rollen die Einstellung von zwei der vorgenannten drei Schaltstellungen möglich ist. Im letzteren Fall weist der Zentralschaltnocken vorteilhaft auf wenigstens einer halben Umfangsseite in unterschiedlichem, radialem Abstand zu seiner Drehachse drei Stellpunkte auf, wobei diese Stellpunkte durch ein im Gehäuse angeordnetes und in Rastausnehmungen des Schalthebels eingreifendes Rastgesperre festlegbar sind. Dabei mag die andere halbe Umfangsseite des Zentralschaltnockens zwei Stellpunkte aufweisen.

Um einerseits eine drehfeste Verbindung zwischen dem Druckmittelzylinder der Lenkrolle und deren Lagerkörper zu schaffen und andererseits zur Schwenkbeweglichkeit der Radgabel sowohl den Druckmittelzylinder als auch den Lagerkörper verwenden zu können, ist nach einer weiteren Ausgestaltung der Erfindung der Druckmittelzylinder der Lenkrolle oberseitig mit einem unrunden Abschnitt in einer unrunden Ausnehmung des Lagerkörpers festgelegt, während das Unterende des Druckmittelzylinders einen mit einer Kugellaufbahn versehenen Flansch aufweist, der einen Abstand zu einem am Lagerkörper angeordneten, ebenfalls mit einer Kugellaufbahn versehenen Flansch aufweist, wobei zwischen die Flansche der Rücken der Rollengabel eingreift, der über Kugelkränze an den Flanschen abgestützt ist.

Damit insbesondere die Schwenkbewegung der Radgabel festgestellt werden kann, ist nach einer weiteren Ausgestaltung der Erfindung der den Druckmittelzylinder der Lenkrolle durchsetzende Kolben in seinem unteren Bereich längsverschiebbar aber undrehbar geführt und greift mit einem, eine Sperrzahnung an seiner unteren Randseite aufweisenden Flansch in die Höhlung der Rollengabel ein und ist mit einem an der Rollengabel festgelegten Bremsorgan im Eingriff. Dieses als Bremshebel ausgebildete Bremsorgan ist vorteilhaft als in der Höhlung der Rollengabel am Gabelrücken einseitig festgelegte Blattfeder ausgebildet, die eine Zahnung zum Eingriff in die Sperrzahnung am Flansch des Kolbens aufweist und mit einem freien Ende in Anlage am glattflächigen, mittleren Bereich des Kolbenflansches abgestützt ist.

Zur Richtungsfeststellung der Lenkrolle weist der in die Höhlung der Rollengabel einragende Flansch des Kolbens vorteilhaft auf seiner dem Flansch des Druckmittelzylinders der Lenkrolle zugekehrten Seite wenigstens eine aufragende Rippe auf, die zur Richtungsfeststellung der Lenkrolle in die Ausnehmung einer am Gabelrücken festgelegten Sperrscheibe einführbar ist.

Die Erfindung ist in einem Ausführungsbeispiel auf der Zeichnung dargestellt und wird nachfolgend näher erläutert. Es zeigen:

Fig. 1 die aus Sperreinrichtung der Lenkrollen und Schalteinheit bestehende Feststellvorrichtung in einer schematischen Darstellung,

Fig. 2 die Schalteinheit der Feststellvorrichtung in einer zum Teil im Horizontalschnitt dargestellten Draufsicht,

Fig. 3 die aus Fig. 2 ersichtliche Schalteinheit in einem Vertikalschnitt nach der Linie III - III von Fig. 2,

Fig. 4 die der Lenkrolle zugehörige Sperreinheit der Feststellvorrichtung in einem Vertikalschnitt durch den Befestigungszapfen der Lenkrolle,

Fig. 5 den oberen Bereich des Befestigungszapfens in einem Querschnitt nach der Linie V - V von Fig. 4,

Fig. 6 den in die Höhlung der Rollengabel eingreifenden Flansch des Kolbens mit der darüber angeordneten, am Radgabelrücken festlegbaren Sperrscheibe in perspektivischer Darstellung.

In die vier rohrförmigen Füße eines Gerätes, wie beispielsweise eines Krankenbettes, ist jeweils eine Lenkrolle 10 mit ihrem zapfenartigen Lagerkörper 11 eingesetzt und in bekannter Weise mittels den Gerätefuß durchdringenden und in den Lagerkörper 11 eingedrehten Schrauben befestigt.

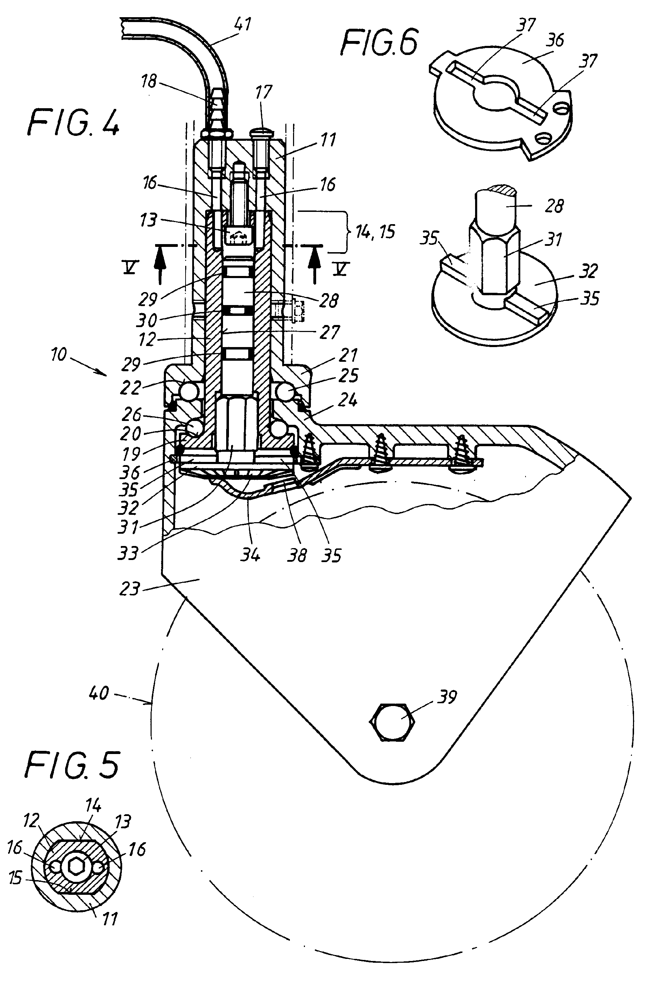

Im hohlzylindrischen Lagerkörper 11 ist ein Druckmittelzylinder 12 angeordnet, indem der Zylinderboden von einer Befestigungsschraube 13 durchdrungen und mit dem Lagerkörper 11 verschraubt ist, wobei eine drehfeste Verbindung zwischen dem Lagerkörper 11 und dem Druckmittelzylinder 12 durch einen von Anflachungen gebildeten unrunden Abschnitt 14 im Bodenbereich des Druckmittelzylinders 12 und eine diesen unrunden Abschnitt 14 umfassende unrunde Ausnehmung 15 des Lagerkörpers 11 erzielt wird. Die Verbindung von Druckmittelzylinder 12 mit dem Lagerkörper 11 durch nur eine einzige Schraube 13 führt zu enormer Vereinfachung der Montage und Instandhaltung der Lenkrolle und ermöglicht daher eine günstige Kostengestaltung. In den Druckmittelzylinder 12 münden von der Stirnseite des Lagerkörpers 11 her zwei Druckmittelleitungen 16, von denen die eine durch eine Entlüftungsschraube 17 verschlossen ist, während in die andere Druckmittelleitung 16 ein Schlauchanschlußzapfen 18 eingeschraubt ist. Am Unterende des Druckmittelzylinders befindet sich ein eine Kugellaufbahn 20 aufweisender Flansch 19, der aus dem unterendig ebenfalls einen Flansch 21 mit einer Kugellaufbahn 22 aufweisenden Lagerkörper 11 ausragt. Zwischen die Flansche 19 und 21 greift der ebenfalls Kugellaufbahnen aufweisende Rücken 24 der Rollengabel 23 unter Zwischenschaltung von Kugellaufkränzen 25 und 26, wodurch eine leichtgängige Verschwenkung der Rollengabel 23 gegenüber dem feststehenden Lagerkörper 11 und dem damit drehfest verbundenen Druckmittelzylinder 12 ermöglicht wird. Im Druckmittelzylinder 12 befindet sich eine im Bereich des Flansches 19 offene, abgestufte Zylinderbohrung 27, die in ihrem unteren Bereich durchmessergrößer unrund, beispielsweise in Form eines Sechskantes, ausgebildet ist. In der Zylinderbohrung ist ein stangenförmiger Kolben 28 mit Kolbenführungsringen 29 und einem Ölverluste vermeidenden Kolbendichtring 30 angeordnet, der bei dem dargestellten Ausführungsbeispiel an seinem Unterende mit einem angeformten Sechskantzapfen 31 in die obenerwähnte unrunde, entsprechend ausgebildete Ausnehmung der Stufenbohrung 27 des Druckmittelzylinders 12 längsverschiebbar aber undrehbar eingreift. Unterhalb dieses Sechskantzapfens 31 ist an die Kolbenstange 28 ein Flansch 32 angeformt, der im Randbereich seiner Unterseite mit einer kegeligen Sperrzahnung 33 versehen ist. Der mittlere Bereich auf der Unterseite des Flansches 32 am Kolben 28 ist als glatte Fläche ausgebildet, an der sich das freie Ende eines ein Bremsorgan darstellenden Bremshebels 34 abstützt. Auf der Oberseite des Flansches 32 befinden sich zwei in radialer Richtung erstreckende und nach oben aufragende Rippen 35, die in Ausnehmungen 37 einer am Radgabelrücken 24 festgelegten Sperrscheibe 36 schließend eingreifen können (Fig. 4 und 6). Im Eingriffszustand der Rippen 35 am Kolbenflansch 32 in die Ausnehmungen 37 der Sperrscheibe 36 erfolgt eine Richtungsfeststellung der Rollengabel 23, so daß deren Verschwenkung im Sperrzustand nicht möglich ist.

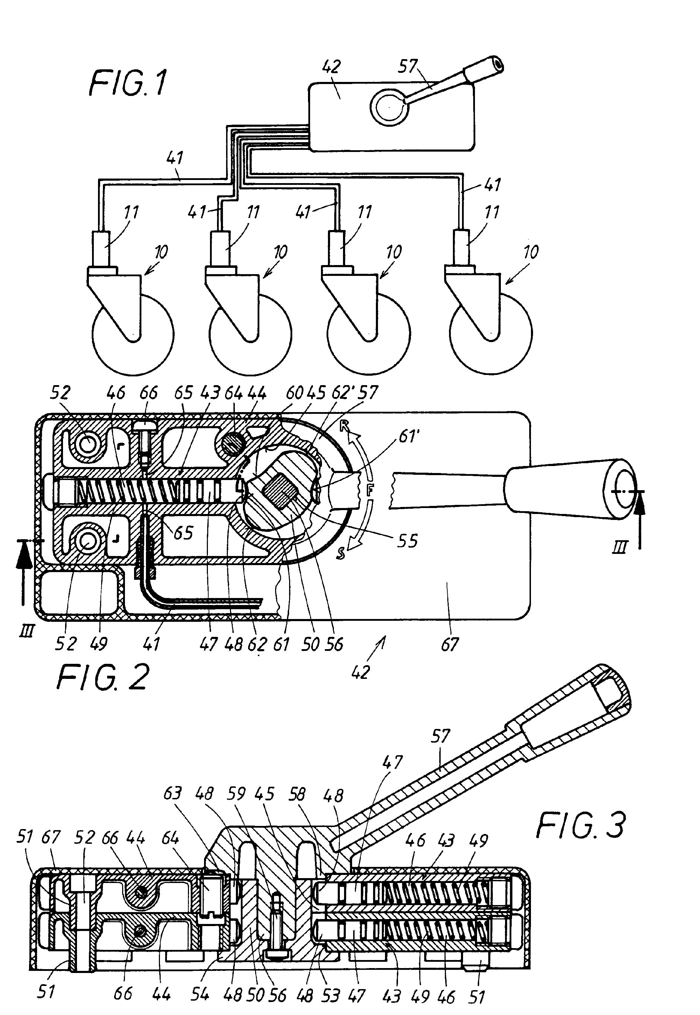

Der Bremshebel 34 ist als Blattfeder ausgebildet und am Gabelrücken 24 einseitig festgelegt. Im Bereich der Sperrzahnung 33 des Kolbenflansches 32 befindet sich am Bremshebel 34 ebenfalls eine Zahnung 38, mit welcher die Sperrzahnung 33 des Kolbenflansches 32 in Eingriff kommen kann, wenn der Kolben soweit niedergedrückt ist, daß der Bremshebel 34 auf der Lauffläche des Lenkrollenrades 40 anliegt. Das ansonsten um die in der Rollengabel festgelegte Achse 39 drehbare Lenkrollenrad 40 ist damit genauso festgestellt, wie die Schwenkbewegung der Rollengabel 23. Der Druckmittelzylinder 12 einer jeden Rolle 10 ist über eine beispielsweise schlauchförmige Druckmittelleitung 41 mit einer zu einer Schalteinheit 42 gehörenden Kolben-Zylindereinheit 43 verbunden. In einem Gehäuse 44 sind zwei Kolben-Zylindereinheiten 43 angeordnet, und zwar derart, daß die beiden einander gegenüberliegenden Kolben-Zylindereinheiten 43 durch eine im mittleren Bereich des Gehäuses angeordnete Lagerbohrung 45 voneinander getrennt sind. In jeder Zylinderbohrung 46 des Gehäuses 44 ist ein mit Kolbenführungsringen und einem Kolbendichtring versehener Kolben 47 derart angeordnet, daß er unter Belastung eines beispielsweise als Druckfeder 49 ausgebildeten Kraftspeichers mit seinem Stellende 48 in die zentrale Lagerbohrung 45 seines Gehäuses 44 einragt. Bei dem dargestellten Ausführungsbeispiel sind, wie insbesondere aus Fig. 3 zu entnehmen ist, zwei Gehäuse 44 mit jeweils zwei Kolben-Zylindereinheiten 43 übereinander angeordnet und bilden mit ihren Lagerbohrungen 45 einen gemeinsamen Aufnahmeraum für einen Zentralschaltnocken 50. Zur Bildung eines aus mehreren Gehäusen 44 bestehenden Gehäuseblocks weist jedes Gehäuse in seinen Eckbereichen unterseitig vorragende Zapfen 51 mit einer abgestuften Befestigungsbohrung 52 auf, wobei die Befestigungsbohrung 52 derart abgestuft ist, daß ihr zur Gehäuseoberseite austretender durchmessergrößerer Teil den vorragenden Zapfen 51 eines anderen Gehäuses aufnehmen kann.

Zur Lagerung des Zentralschaltnockens 50 in der Lagerbohrung 45 der Gehäuse 44 weist dieser einen Zylinderkragen 53 auf, an den sich ein an der Unterseite des unteren Gehäuses 44 anlegender Kragenring 54 anschließt. Im Zentrum des Zentralschaltnockens befindet sich eine, bei dem dargestellten Ausführungsbeispiel als Vierkantloch ausgeführte unrunde Ausnehmung 55, in welche der Mitnehmerzapfen 56 eines Schalthebels 57 eingreift. Der sich einerseits auf der Oberseite des oberen Gehäuses 44 mit seiner Nabe anlegende Schalthebel 57 greift andererseits mit einem Kragenring 58 in die Lagerbohrung 45 des Gehäuses 44 ein und zentriert zusammen mit dem Zylinderkragen 53 den Zentralschaltnocken 50. Für den axialen Zusammenhalt von Zentralschaltnocken 50 und Schalthebel 57 sorgt die aus Fig. 3 ersichtliche Verbindungsschraube 59.

Der bei dem vorliegenden Ausführungsbeispiel verwendete und insbesondere aus Fig. 2 ersichtliche Zentralschaltnocken 50 weist zwei unterschiedliche halbe Umfangsseiten mit voneinander verschiedenem Steuerkurvenverlauf auf. Die in Fig. 2 linke halbe Umfangsseite des Zentralschaltnockens weist drei Stellpunkte 60, 61, 62 auf, von denen der Stellpunkt 60 den kleinsten radialen Abstand, der Stellpunkt 61 einen mittleren radialen Abstand und der Stellpunkt 62 den größten radialen Abstand von der Drehachse des Zentralschaltnockens 50 aufweist. In der aus Fig. 2 ersichtlichen Schaltlage liegt das Stellende 48 des Kolbens 47 am Stellpunkt 61 des Zentralschaltnockens 50 an. Diese Anlageposition entspricht einer Schaltlage des Kolbens 28, bei welcher dieser mit seinem Flansch 32 soweit nach unten verschoben ist, daß die Rippen 35 aus den Ausnehmungen 37 der Sperrscheibe 36 bereits ausgetreten sind, jedoch der Bremshebel noch nicht soweit heruntergedrückt ist, daß er auf der Lauffläche des Lenkrollenrades 40 aufliegt und ebenfalls seine Zahnung 38 noch nicht in die Sperrzahnung 33 des Kolbenflansches 32 eingetreten ist. In der aus Fig. 2 ersichtlichen Stellung des Schalthebels befindet sich demnach die Lenkrolle 10 in einer Freistellung, bei der sowohl die Schwenkbewegung der Rollengabel 23 als auch die Drehbewegung des Lenkrollenrades 40 uneingeschränkt möglich ist.

Wenn jedoch der Schalthebel 57 aus seiner Stellung "F" entgegen dem Uhrzeigersinn in die Stellung "R" geschwenkt wird, so kommt das Stellende 48 eines jeden Kolbens 47 mit dem Stellpunkt 60 in Berührung, der näher am Drehmittelpunkt des Zentralschaltnockens 50 liegt als der Stellpunkt 61. Durch die Druckfeder 49 wird der Kolben 47 demnach weiter aus der Zylinderbohrung 46 ausgeschoben, als in Fig. 2 dargestellt ist. Durch den entstehenden Unterdruck fließt Druckmittel aus dem Druckmittelzylinder 12 der Lenkrolle 10 in die Kolben-Zylindereinheit 43 zurück, so daß durch die Eigenfederung des Bremshebels 34 der Kolben 28 der Lenkrolle 10 in die aus Fig. 4 ersichtliche Lage nach oben zurückgedrückt wird. In dieser Stellung des Kolbens 28 bzw. seines Flansches 32 können dessen Rippen 35 in die Ausnehmungen 37 der Sperrscheibe 36 der Rollengabel 23 zurückgelangen, so daß zwar das Lenkrollenrad 40 frei drehbar ist, während eine Verschwenkung der Rollengabel 23 nicht mehr möglich ist. In dieser Schaltstellung ist eine Richtungsfeststellung der Lenkrolle erzielt. Diese Schaltstellung der Lenkrolle 10 ist auf der Zeichnung in Fig. 4 dargestellt.

Wenn jedoch der Schalthebel 57 aus seiner in Fig. 2 ersichtlichen Lage im Uhrzeigersinn nach unten in die Stellung "S" gedrückt wird, so kommt das Stellende 48 der Kolben 47 mit dem Stellpunkt 62 des Schaltnockens 50 in Berührung. Da dieser Stellpunkt 62 den größten Abstand von der Drehmitte des Schaltnockens 50 aufweist, wird der Kolben 47 aus der Lagerbohrung 45 gegen die Kraft der Druckfeder 49 vollständig herausgedrückt, so daß aus der Kolben-Zylindereinheit 43 das größtmögliche Druckmittelvolumen herausgedrückt und in den Druckmittelzylinder 12 der Lenkrolle 10 überführt wird. Dadurch wird der Kolben 28 soweit nach unten verschoben, daß sein Kolbenflansch 32 in die tiefstmögliche Stellung gelangt, wodurch zwar auch die Rippen 35 aus den Ausnehmungen 37 der Sperrscheibe 36 gelangen, jedoch der Bremshebel 34 mit seiner Unterseite auf die Lauffläche des Lenkrollenrades 40 gepreßt wird, während gleichzeitig die Zahnung 38 des Bremshebels 34 in die kegelförmige Sperrzahnung 33 auf der Unterseite des Kolbenflansches 32 eingreift. Damit ist sowohl die Schwenkbewegung als auch die Laufradbewegung unterbrochen und eine totale Stoppstellung erzielt.

Diese vorbeschriebenen Schaltstellungen werden bei allen vier Lenkrollen dann erreicht, wenn beide halbe Umfangsseiten des Zentralschaltnockens 50 die vorbeschriebene Gestaltung aufweisen. Bei dem aus Fig. 2 ersichtlichen Ausführungsbeispiel ist jedoch dargestellt, daß die rechte halbe Umfangsseite nur zwei Stellpunkte 61' und 62' aufweist, die den Stellpunkten 61 und 62 auf der linken halben Umfangsseite des Zentralschaltnockens 50 entspricht. Bei den Lenkrollen, die durch die Kolben-Zylindereinheiten 43 auf der rechten Seite der Schalteinheit gesteuert werden, ist demzufolge nur eine Freistell-Lage des Bremsorgans 34, bei der sowohl die Drehbewegung des Lenkrollenrades 40 als auch die Schwenkbewegung der Rollengabel 23 freigegeben wird oder die vollständige Stoppstellung von Lenkrollenrad 40 und Rollengabel 23 möglich. Eine Richtungsfixierung der beiden von den auf der rechten Seite der Schalteinheit angeordneten Kolben-Zylindereinheiten gesteuerten Lenkrollen ist bei dem aus den Zeichnungen ersichtlichen Ausführungsbeispiel nicht möglich. Es genügt jedoch, wenn von den vier Lenkrollen eines verfahrbaren Gerätes bzw. Krankenbettes zwei in "Geradeauslaufstellung" fixiert sind, während die beiden anderen Lenkrollen frei schwenkbar sind.

Um die Schaltstellungen des Schalthebels 57 bei der jeweiligen Einstellung der Stellpunkte 60 bis 62' aufrechterhalten zu können, weist der Schalthebel 57 an der Unterseite seiner Nabe drei den Stellpunkten 60, 61 und 62 zugeordnete Rastausnehmungen 63 auf, in welche ein im Gehäuse 44 festgelegtes Rastgesperre 64 eingreifen kann. Dieses Rastgesperre 64 besteht bei dem dargestellten Ausführungsbeispiel aus einem Schraubzapfen, der im Bereich seines Einschraubendes einen Hohlraum zur Aufnahme einer aus dem Einschraubende ausragenden Kugel aufweist.

Wie bereits oben erwähnt, dienen zur Verbindung zwischen den Kolben-Zylindereinheiten 43 der Schalteinheit und dem jeweiligen Druckmittelzylinder der Lenkrollen Druckmittelleitungen 41, die auf den Schlauchanschlußzapfen 18 am Lagerkörper 11 einer jeden Lenkrolle 10 aufgesteckt sind und in einem im Längsmittenbereich der Zylinderbohrung 46 angeordneten und diese durchquerenden Druckmittelleitung 65 auf einer Seite festgelegt sind. Die andere Seite der Druckmittelleitung 65 ist durch eine Entlüftungsschraube 66 verschlossen. Die zu einem Block vereinigten Gehäuse 44 sind an beliebiger Stelle des Krankenbettes mittels in die Befestigungsbohrungen 52 eingeführter Schrauben zu befestigen und die Stelleinheit läßt sich durch eine Gehäusekappe 67 abdecken.

Wie bereits erwähnt, gibt die dargestellte und vorbeschriebene Ausführungsform die Erfindung lediglich beispielsweise wieder, die keinesfalls allein darauf beschränkt ist. Es sind vielmehr noch mancherlei andere Ausführungen und Ausgestaltungen der Erfindung denkbar. So läßt sich beispielsweise der Zentralschaltnocken 50 auch für die übereinander angeordneten Kolben-Zylindereinheiten 43 auf einer halben Umfangsseite unterschiedlich gestalten, so daß eine variable Stellpunkt-Anordnung für die Steuerung des Lenkrollenkolbens 28 möglich ist. Außerdem versteht es sich, daß die Schwenklagerung statt durch die Kugelkränze 25, 26 auch durch Rillenkugellagerung oder Gleitlagerung ersetzt werden kann.

## Patentansprüche

1. Feststellvorrichtung für Lenkrollen von verfahrbaren Geräten, insbesondere Krankenbetten, wobei die Rollengabel (23) einer Lenkrolle (10) an einem am Gerätefuß angeordneten, einen Druckmittelzylinder (12) umfassenden Lagerkörper (11) schwenkbar gelagert ist und in der Rollengabel (23) ein am Lenkrollenrad (40) sowie an einer mit dem Lagerkörper (11) in drehfester Verbindung stehenden Sperrscheibe (32,33) zur Feststellung der Schwenkbewegung angreifbares Bremsorgan (34) mittels eines im Druckmittelzylinder (12) geführten, in zwei Endstellungen durch eine Rückstellfeder einerseits und ein Druckmittel andererseits überführbaren Kolbens(28) betätigbar angeordnet ist, wobei der Druckmittelzylinder (12) einer jeden Lenkrolle (10) mittels einer Druckmittelleitung (41) mit einer zentralen, Druck erzeugenden, kolbenbetätigten Schalteinheit (42) verbunden ist,

**dadurch gekennzeichnet,**

daß die Schalteinheit (42) jeweils eine jeder Lenkrolle (10) zugehörige, von einem Stellpunkte (61 bis 62) aufweisenden Zentralschaltnocken (50) betätigbare Kolben-Zylindereinheit (43) umfaßt, mit der jedem Druckmittelzylinder (12) einer jeden Lenkrolle (10) eine portionierte Druckmittelmenge zur Überführung der Sperrscheibe (32,33) aus ihrer federbelasteten einen Endstellung für die Richtungsfeststellung in ihre Freistellung einerseits und darüber hinaus in ihre andere Endstellung für die totale Stoppstellung andererseits zuführbar ist.

2. Feststellvorrichtung nach Anspruch 1, dadurch gekennzeichnet, daß je zwei Kolben-Zylindereinheiten (43) in einem Gehäuse (44) einander gegenüberliegend angeordnet und durch eine den Zentralschaltnocken (50) aufnehmende Lagerbohrung (45) voneinander getrennt sind, wobei in die Lagerbohrung (45) das Stellende (48) jeden in jeder Zylinderbohrung (46) des Gehäuses (44) in Richtung auf den Zentralhaltenocken federbelasteten Kolbens (47) einragt.

3. Feststellvorrichtung nach Anspruch 2, dadurch gekennzeichnet, daß aus dem Gehäuse (44) unterseitig Zapfen (51) mit diese durchdringender, abgestufter Befestigungsbohrung (52) vorragen und diese Zapfen (51) der Zentrierung und Verbindung von übereinander angeordneten, gleichgestalteten Gehäusen (44) zu einem Gehäuseblock dienen.

4. Feststellvorrichtung nach einem oder mehreren der vorhergehenden Ansprüche, dadurch gekennzeichnet, daß der Zentralschaltnocken (50) einen in der Lagerbohrung (45) des Gehäuses (44) anliegenden Zylinderkragen (53) aufweist, an den sich ein an eine Gehäuseaußenseite anlegender Kragenring (54) anschließt, während im Zentrum des Zentralschaltnockens (50) eine unrunde Ausnehmung (55) zur Aufnahme des Mitnehmerzapfens (56) eines in die Lagerbohrung (45) eingreifenden und die dem Kragenring (58) gegenüberliegende Gehäuseaußenseite übergreifenden Schalthebels (57) aufweist.

5. Feststellvorrichtung nach einem oder mehreren der vorhergehenden Ansprüche, dadurch gekennzeichnet, daß der Zentralschaltnocken (50) auf wenigstens einer halben Umfangsseite in unterschiedlichem radialen Abstand zu seiner Drehachse drei Stellpunkte (60, 61, 62) aufweist, wobei diese Stellpunkte durch ein im Gehäuse (44) angeordnetes und in Rastausnehmungen (63) des Schalthebels (57) eingreifendes Rastgesperre (64) festlegbar sind.

6. Feststellvorrichtung nach Anspruch 5, dadurch gekennzeichnet, daß die eine halbe Umfangsseite des Zentralschaltnockens (50) drei Stellpunkte (60, 61, 62) und die andere halbe Umfangsseite des Zentralschaltnockens (50) zwei Stellpunkte (61′, 62′) aufweist.

7. Feststellvorrichtung nach einem oder mehreren der vorhergehenden Ansprüche, dadurch gekennzeichnet, daß der Druckmittelzylinder (12) der Lenkrolle (10) oberseitig mit einem unrunden Abschnitt (14) in einer unrunden Ausnehmung (15) des Lagerkörpers (11) festgelegt ist, während das Unterende des Druckmittelzylinders (12) einen mit einer Kugellaufbahn (20) versehenen Flansch (19) aufweist, der einen Abstand zu einem am Lagerkörper (11) angeordneten, ebenfalls mit einer Kugellaufbahn (22) versehenen Flansch (21) aufweist, wobei zwischen die Flansche (19, 21) der Rücken (24) der Rollengabel (23) eingreift, der über Kugelkränze (25, 26) an den Flanschen (19, 20) abgestützt ist.

8. Feststellvorrichtung nach einem oder mehreren der vorhergehenden Ansprüche, dadurch gekennzeichnet, daß der den Druckmittelzylinder (12) der Lenkrolle durchsetzende Kolben (28) in seinem unteren Bereich längsverschiebbar aber undrehbar geführt ist und mit einem eine Sperrzahnung (33) an seiner unteren Randseite aufweisenden Flansch (32) in die Höhlung der Rollengabel (23) eingreift und mit einem an der Rollengabel (23) festgelegten Bremsorgan (34) im Eingriff ist.

9. Feststellvorrichtung nach Anspruch 8, dadurch gekennzeichnet, daß der Bremshebel (34) als in der Höhlung der Rollengabel (23) am Gabelrücken einseitig festgelegte Blattfeder ausgebildet ist, die eine Zahnung (38) zum Eingriff in die Sperrzahnung (33) am Flansch (32) des Kolbens (28) aufweist und mit einem freien Ende in Anlage am mittleren Bereich des Kolbenflansches abgestützt ist.

10. Feststellvorrichtung nach einem oder mehreren der vorhergehenden Ansprüche, dadurch gekennzeichnet, daß der in die Höhlung der Rollengabel (23) einragende Flansch (32) des Kolbens (28) auf seiner dem Flansch (19) des Druckmittelzylinders (12) der Lenkrolle zugekehrten Seite wenigstens eine aufragende Rippe (35) aufweist, die zur Richtungsfeststellung der Lenkrolle in die Ausnehmung (37) einer am Gabelrücken (24) festgelegten Sperrscheibe (36) einführbar ist.

## Claims

1. A locking arrangement for castors of movable assemblies, in particular sick beds, wherein the fork (23) of a castor (10) is pivotably mounted on a mounting body (11) which is arranged at the bottom of the assembly and which includes a pressure fluid cylinder (12) and a braking member (34) which can engage the castor wheel (40) and a locking disc (32, 33) which is non-rotatably connected to the mounting body (11), for locking the pivotal movement, is arranged in the fork (23), actually by means of a piston (28) which is guided in the pressure fluid cylinder (12) and which can be moved into two limit positions by a return spring on the one hand and a pressure fluid on the other hand, wherein the pressure fluid cylinder (12) of each castor (10) is connected by means of a pressure fluid line (41) to a central, pressure-producing, piston-actuated shift unit (42), characterised in that the shift unit (42) includes a respective piston-cylinder unit (43) associated with each castor (10) and actuable by a central shift cam (50) having setting points (61 to 62), with which piston-cylinder unit an apportioned amount of pressure fluid can be supplied to each pressure fluid cylinder (12) of each castor (10) for moving the locking disc (32, 33) out of its spring-loaded one limit position for directional locking into its free position on the one hand and therebeyond into its other limit position for the total stop position on the other hand.

2. A locking arrangement according to claim 1 characterised in that a respective pair of piston-cylinder units (43) are arranged in mutually opposite relationship in a housing (44) and are separated from each other by a mounting bore (45) which accommodates the central shift cam (50), wherein the setting end (48) of each piston (47) which is spring-loaded towards the central shift cam in each cylinder bore (46) in the housing (44) projects into the mounting bore (45).

3. A locking arrangement according to claim 2 characterised in that projections (51) project out of the housing (44) at the underside thereof, the projections having a stepped fixing bore (52) passing therethrough, and said projections (51) serve for centering and connecting housings (44) of the same configurations which are arranged one above the other, to provide a housing assembly.

4. A locking arrangement according to one or more of the preceding claims characterised in that the central shift cam (50) has a cylindrical collar (53) which is supported in the mounting bore (45) in the housing (44) and which is adjoined by a flange ring (54) which bears against an outward side of the housing, while in the centre of the central shift cam (50) there is a non-round opening (55) for receiving the drive projection (56) of a shift lever (57) which engages into the mounting bore (45) and which engages over the outward side of the housing, which is opposite to the flange ring (58).

5. A locking arrangement according to one or more of the preceding claims characterised in that the central shift cam (50) has three setting points (60, 61, 62) on at least a half of its peripheral side at different radial spacings relative to its axis of rotation, wherein said setting points are determinable by a detent locking device (64) which is arranged in the housing (44) and which engages into detent recesses (63) in the shift lever (57).

6. A locking arrangement according to claim 5 characterised in that the one half of the peripheral side of the central shift cam (50) has three setting points (60, 61, 62) and the other half of the peripheral side of the central shift cam (50) has two setting points (61', 62').

7. A locking arrangement according to one or more of the preceding claims characterised in that the pressure fluid cylinder (12) of the castor (10) is fixed at its top end with a non-round portion (14) in a non-round recess (15) in the mounting body (11) while the lower end of the pressure fluid cylinder (12) has a flange (19) which is provided with a ball track (20) and which is at a spacing relative to a flange (21) which is disposed on the mounting body (11) and which is also provided with a ball track (22), wherein engaging between the flanges (19, 21) is the back (24) of the fork (23) which is supported against the flanges (19, 20) by way of ball rings (25, 26).

8. A locking arrangement according to one or more of the preceding claims characterised in that the piston (28) which passes through the pressure fluid cylinder (12) of the castor is guided longitudinally slidably but non-rotatably in its lower region and engages into the cavity of the fork (23) with a flange (32) having a locking tooth configuration (33) at its lower edge side and is in engagement with a braking member (34) which is fixed to the fork (23).

9. A locking arrangement according to claim 8 characterised in that the braking lever (34) is in the form of a leaf spring which is fixed at one end to the back of the fork in the cavity of the fork (23) and which has a tooth configuration (38) for engagement into the locking tooth configuration (33) on the flange (32) of the piston (28) and is supported with a free end against the middle region of the piston flange.

10. A locking arrangement according to one or more of the preceding claims characterised in that the flange (32) on the piston (28), which extends into the cavity of the fork (23), has, on its side towards the flange (19) of the pressure fluid cylinder (12) of the castor, at least one upstanding rib (35) which can be introduced into an opening (37) in a locking disc (36) which is fixed to the back (24) of the fork, for directional locking of the castor.

**Revendications**

1. Dispositif de blocage pour roues à pivot d'appareils déplaçables, en particulier de lits d'hôpital, dans lequel la fourche (23) d'une roue à pivot (10) est montée à pivotement dans un corps de palier (1) comprenant un vérin (12) et équipant un pied de l'appareil, tandis que dans la fourche (23) est disposé un organe de freinage (24) qui peut avoir prise sur la roue à pivot (40) et sur un disque de blocage (32, 33) lié rigidement en rotation avec le corps de palier (11), pour la fixation du mouvement de pivotement, au moyen d'un piston (28) guidé dans le vérin (12) et actionnable entre deux positions extrêmes, d'une part par un ressort de rappel et d'autre part par un moyen de pression, le vérin (12) de chacune des roues à pivot (10) étant relié par une conduite de pression (41) à un bloc central de commande (42), générateur de pression et actionnant les pistons, caractérisé en ce que le bloc de commande (42) comporte, pour chaque roue à pivot (10) et manoeuvrable au moyen d'une came centrale de commande (50) présentant des points de réglage (61 à 63), un ensemble piston-cylindre 43 avec lequel on envoie une quantité de moyen hydraulique, à chaque cylindre de pression (12) de chaque roue à pivot (10), pour faire passer le disque de blocage (32, 33) de sa position extrême maintenue par ressort pour fixer d'une part la position de relâchement et, en plus, d'autre part, son autre position extrême où il y a blocage total.

2. Dispositif de blocage selon la revendication 1, caractérisé en ce que deux ensembles piston-cylindre ou vérin (43) sont disposés chacun dans un carter (44), ces carters étant superposés et séparés l'un de l'autre par un alésage de palier (45) où aboutit la came centrale de commande (50), l'extrémité de réglage (48) de chacun des pistons (47) rappelé par ressort dans chaque alésage de cylindre (46) du carter (44) en direction de la came centrale de commande, faisant saillie dans l'alésage de palier (45).

3. Dispositif de blocage selon la revendication 2, caractérisé en ce que des doigts (51) font saillie sur la face inférieure du carter (44) et présentent des alésages de fixation (52) étagés les traversant, et en ce que ces doigts (51) servent au centrage et à la liaison en un bloc de boîtier, des boîtiers (44) identiques et superposés.

4. Dispositif de blocage selon une ou plusieurs des revendications précédentes, caractérisé en ce que la came centrale de commande (50) comporte un col de cylindre (53) adjacent à l'alésage de palier du carter (44), auquel s'ajuste un épaulement annulaire (54) contigu à la face extérieure du carter, tandis qu'il présente au centre de la came centrale de commande (50) une ouverture non circulaire (55) pour recevoir une broche d'entraînement (56) d'un levier de commande (57) pénétrant dans l'alésage de palier (45) recouvrant la face extérieure du carter faisant face à l'épaulement annulaire (58).

5. Dispositif de blocage selon une ou plusieurs des revendications précédentes, caractérisé en ce que la came centrale de commande (50) présente au moins sur la moitié de son pourtour, dans différentes distances radiale par rapport à son axe de rotation, trois points de réglage (60, 61, 62), ces points de réglage étant fixables grâce à un verrou à crans (64) disposé dans le carter (44) et en prise dans des cavités à crans (63) du levier de commande (57).

6. Dispositif de blocage selon la revendication 5, caractérisé en ce que l'une des moitiés de face de pourtour de la came centrale de commande (50) comporte trois points de réglage (60, 61, 62) et l'autre demi-pourtour de cette came deux points de réglage (61', 62').

7. Dispositif de blocage selon une ou plusieurs des revendications précédentes, caractérisé en ce que le vérin (12) de la roue à pivot (10) est fixé sur sa face supérieure de section non circulaire (14) dans un évidement non circulaire (15) du corps de palier (11), tandis que l'extrémité inférieure du vérin (12) comporte une collerette (19) présentant une piste de roulement à billes (20), qui est espacée d'une collerette (21) présentant également une piste de roulement à billes (22) et est ménagée sur le corps de palier (11), le dos (24) de la fourche (23) pénétrant entre les collerettes (19, 21) et s'appuyant sur celles-ci par l'intermédiaire des couronnes à billes (25, 26).

8. Dispositif de blocage selon une ou plusieurs des revendications précédentes, caractérisé en ce que le piston (28) traversant le vérin (12) de la roue à pivot est guidé dans sa région inférieure et est mobile seulement en translation longitudinale en étant en prise par une collerette (32) de son bord inférieur présentant une denture de blocage (33) dans la cavité de la fourche (23) et est en prise avec un organe de freinage (34) fixé à la fourche (23).

9. Dispositif de blocage selon la revendication 8, caractérisé en ce que le levier de freinage (34) est constitué par une lame de ressort qui est fixée d'un côté au dos de la fourche (23), dans sa cavité, et qui présente une denture (38) pour engrènement avec la denture de blocage (33) de la collerette (32) du piston (28) en étant en appui par son extrémité libre dans la région médiane de la collerette du piston.

10. Dispositif de blocage selon une ou plusieurs des revendications précédentes, caractérisé en ce que la collerette (32) du piston (28) faisant saillie dans la cavité de la fourche (23) présente, sur celle de ses faces tournée vers la collerette (19) du cylindre de pression (12), au moins une nervure (35) en saillie que l'on peut faire entrer dans l'évidement (37) d'un disque de blocage (36) attenant à la fourche, dans le but de fixer la direction de la roue à pivot.

FIG.1

FIG. 2

FIG. 3

FIG. 4

FIG.6

FIG. 5